# EUROPEAN PATENT SPECIFICATION

(11) **EP 1 461 293 B1**
(45) Date of publication and mention of the grant of the patent: **30.08.2006**
(21) Application number: 02783128.8
(22) Date of filing: 05.12.2002
(51) Int. Cl.: C03B 37/029, C03B 37/025

(54) **A METHOD AND A DEVICE IN THE MANUFACTURE OF AN OPTICAL FIBRE**
VERFAHREN UND VORRICHTUNG BEI DER HERSTELLUNG EINER LICHTLEITFASER
PROCEDE ET DISPOSITIF POUR LA FABRICATION D'UNE FIBRE OPTIQUE

(30) Priority: 07.12.2001 FI 20012414
(43) Date of publication of application: 29.09.2004
(73) Proprietor: Photonium OY, 08700 Virkkala (FI)
(72) Inventor: JANKA, Kauko, FIN-33720 Tampere (FI); TUURNALA, Taneli, FIN-02180 Espoo (FI); MATTILA, Timo, FIN-02230 Espoo (FI); RAJALA, Markku, FIN-00910 Helsinki (FI)
(74) Representative: Pursiainen, Timo Pekka
(86) International application number: PCT/FI2002/000990
(87) International publication number: WO 2003/050048

(56) References cited:
- EP-A1- 1 101 745
- US-A- 4 309 201
- US-A- 4 988 374

## Description

The invention relates to a method of manufacturing an optical fibre according to the preamble of the appended claim 1. The invention also relates to a device for implementing this method, according to the preamble of the appended claim 4.

The manufacture of an optical fibre can be roughly divided in two different steps. In the first step, a preform is manufactured for the optical fibre. The fibre preform is a relatively short, rigid and thick bar of quartz glass which is provided with the optical properties of the fibre to be manufactured, such as, for example, a radial refractive index distribution, in connection with the manufacture of said preform. In the next step, the preform is placed in a so-called drawing furnace, in which the fibre preform is drawn to a thin and flexible optical fibre. In connection with the drawing of the fibre, the fibre is also typically coated with one or more buffer coatings before it is reeled up for storage.

In a drawing furnace, which is in a vertical position, the lower end of the fibre preform, placed vertically inside the furnace, is typically heated to a temperature of approximately 2000°C with a heating element which surrounds the fibre preform symmetrically in the horizontal plane. This heating element is typically made of a graphite material whose heating is arranged to take place inductively. When the lower end of the fibre preform reaches a sufficiently high temperature, the molten quartz glass, which is partly in fluidized condition, is pulled downwards by gravity, whereby a thin fibre is thus formed in a continuous process. The diameter of the optical fibre forming in the above-described manner can be controlled e.g. by adjusting the heating of the fibre preform and by affecting the winding speed, *i.e.* the drawing speed, of the fibre.

In the manufacture of optical fibres in a drawing furnace, a known problem lies in impurities which, being fine particles, find their way into the fibre. These particles typically originate from the heating elements or other parts of the drawing furnace at a high temperature. Typically, the particles are, for example, of silicon carbide or carbon. Glass material loosening from the fibre preform as such may also form particles which disturb the process. When impinging on the molten quartz glass forming into fibre, the above-mentioned impurities cause local defects (discontinuities) in the fibre, which affect the strength of the fibre and may, at a later stage, cause, for example, the breaking of the fibre.

US patent 4,547,644 discusses the above-mentioned problems caused by impurities in the drawing of the fibre, and as a solution to the problem, said publication presents a structure equipped with particular sealing means for the heating elements of the drawing furnace, to reduce the formation of impurities inside the furnace.

US patent 6,189,341 presents, as a solution to the problems caused by impurities, the coating of the preform with a special particle-digesting substance before the drawing of the fibre in a drawing furnace. Suitable substances for this purpose include, for example, lithium tetraborate Li₂B₄O₇ and lithium metaborate LiBO₂.

US patent 4,988,374 discloses an arrangement in which the drawing furnace is provided, after a heating zone generated by a heating element, with a tube, through which the fibre to be drawn is passed and in which tube impurities carried by gases are deposited on its inner surface on the principle of condensation.

There is also a prior art arrangement using an upwards gas flow in the drawing furnace, wherein the particles formed inside the furnace are guided upwards with said gas flow and thus do not impinge on the downwards falling molten quartz glass forming into fibre.

However, the above-mentioned arrangements of prior art have not been able to solve the problems involved in the impurities in a quite satisfactory manner. In spite of the various materials used in the heating elements and other components of the drawing furnace, and the special structural arrangements, there are always some particles formed inside the furnace which disturb the drawing of the fibre. If these particles are to be guided away from the vicinity of the fibre being formed, by means of upwards gas flows inside the furnace, at the same time these gas flows will also disturb the fibre forming process. Particularly when high drawing speeds are used, it is advantageous that the speed difference between the gas flowing in the furnace, typically an inert gas such as argon, and the fibre being formed, is as small as possible. In this way, it is possible to avoid turbulence between the gas flow and the fibre and to draw an optical fibre having a diameter of uniform thickness and being of uniform quality.

The primary aim of the present invention is to present a new method for use in the manufacture or an optical fibre in a drawing furnace, which method is used to efficiently prevent that impurities formed inside the drawing furnace penetrate into the fibre being formed. The invention also relates to a device implementing the method.

The above aim is achieved by the method according to independent claim 1 and by the device according to independent claim 4.

The other, dependent claims present some preferred embodiments of the invention.

The basic idea of the invention is that when an optical fibre is manufactured by means of a vertical drawing furnace, in which a fibre preform is heated in a heating zone in such a way that a thin fibre is formed of the molten material being thus formed at the lower end of the fibre preform by means of gravity and/or downward drawing of the fibre, one or more cooled means are arranged after said drawing furnace and heating zone, along the path of the molten or still partly molten fibre, to thermophoretically deposit, on its surface, impurities contained in the gas flow surrounding the fibre.

Preferably, said one or more cooled means are arranged symmetrically around the path of the fibre in such a way that the downwards moving fibre is passed between or through the cooled means.

In an advantageous embodiment of the invention, said one or more cooled means are further designed and placed in such a way that the solid angle covered by said means, seen from the fibre, is small, wherein said means do not substantially cool the fibre by radiative heat transfer.

Preferably, said one or more cooled means are further implemented in such a way that the distance between the means and the fibre can be adjusted during the fibre drawing process.

In an advantageous embodiment of the invention, the cooled means are implemented as a ribbed structure surrounding the fibre symmetrically in the vertical direction, in which structure the single vertical ribs have a preferably wedge-like cross-section in the direction transverse to the travel direction (horizontal direction) of the fibre, the sharper ends of the ribs being pointed towards the fibre.

Consequently, by the invention, the significant advantage is attained that impurities possibly loosened from the drawing furnace or the fibre preform are efficiently collected by thermophoresis away from the vicinity of the molten quartz glass forming into fibre but in such a way that the gas flow surrounding the fibre is substantially not disturbed. Thus, a special advantage of the arrangement according to the invention is that the method now allows for the precise control of gas flows surrounding the fibre, such as the use of e.g. downwards directed gas flows inside the drawing furnace and around the fibre, which is known to be a very significant requirement for the manufacture of an optical fibre with a diameter of uniform thickness, particularly when high drawing speeds are used. Furthermore, the present invention makes it possible, for the first time, to apply thermophoresis in the collection of impurities from the hot gas layer surrounding the fibre without subjecting the fibre to a cold shock which would impair its quality.

The following more detailed description of the invention with examples will more clearly illustrate, for anyone skilled in the art, preferred embodiments of the invention as well as advantages to be achieved with the invention in relation to background art.

In the following, the invention will be described in more detail with reference to the appended drawings, in which
- Fig. 1: shows, in a principle side view, a first embodiment of the invention,
- Fig. 2: shows, in a principle view, the thermophoretic collector of Fig. 1 in a cross-section seen from the direction of drawing of the fibre,
- Fig. 3: shows, in a principle view similar to that of Fig. 2, a second thermophoretic collector according to the invention,
- Fig. 4: shows, in a principle side view, a third embodiment of the invention, and
- Fig. 5: shows, in a principle view, the thermophoretic collector of Fig. 4 in a cross-section seen from the direction of drawing of the fibre.

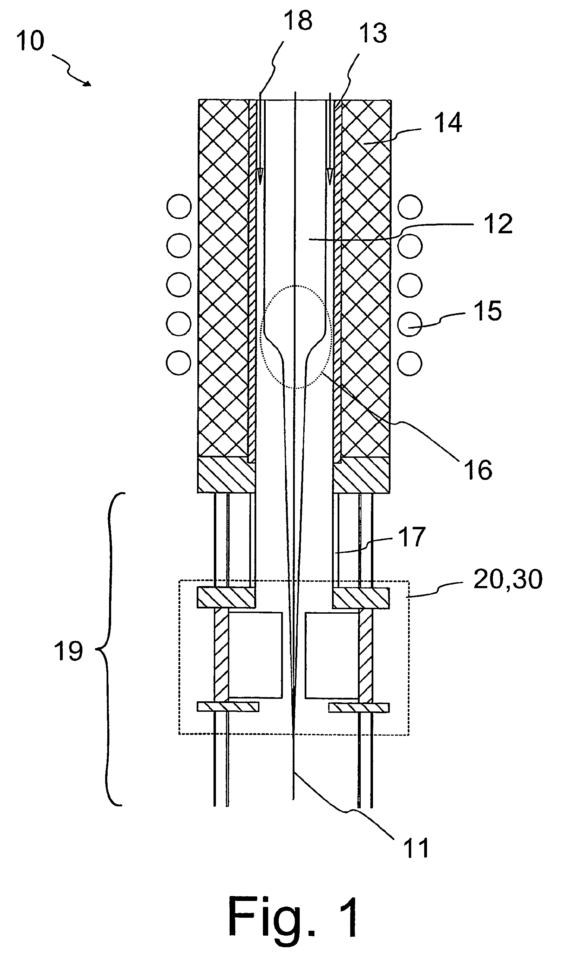

Figure 1 shows, in principle, the structure of a drawing furnace 10 to be used in the manufacture of an optical fibre 11.

A quartz glass fibre preform 12, which is typically 50 to 100 mm in diameter and 500 to 2,000 mm in length, is placed in a vertical position in a tubular heating element 13. The material of the heating element 13 may be, for example, graphite, which endures well the temperatures of the process, which can be in the order of 2000°C. The heating element 13 is surrounded by an insulating layer 14, which can be, for example, of porous graphite wool.

An induction coil 15 is arranged to heat the heating element 13 by electric induction in a heating zone generated at said coil, the lower end of the fibre preform 12 being placed in said heating zone. Because of the heating effect of the heating element 13, molten material 16 is formed at the lower end of the fibre preform 12, which molten material is further formed to a thin, downwards extending fibre 11 by gravity and/or drawing of the fibre 11.

In the drawing direction of the fibre, a so-called extension tube 19 is arranged after the heating element 13 in the drawing furnace 10, for the primary purpose of preventing the fibre from cooling too quickly. To manufacture an optical fibre 11 of good quality, it is important that the forming fibre 11 is not subjected to a so-called cold shock. In this context, the cold shock means that stress states caused by too fast cooling remain in the crystal structure of the fibre 11 being formed, in which case the final crystal structure of the fibre 11 remains imperfect. This would significantly impair the optical properties of the fibre 11 and also affect the mechanical strength of the fibre 11.

The upper part of the extension tube 19 is preferably provided with a portion of a quartz tube 19 having a typical length of 100 to 500 mm. The purpose of this portion is to insulate the heating element 13 at a high temperature from the lower parts of the drawing furnace 10 (extension tube 19). The quartz tube 17 is well suited for this purpose because of its high heat resistance, wherein the quartz tube 17 as such does not need to be cooled directly and actively, and the fibre 11 is thus not subjected to a cold shock. Instead of quartz, it is also possible to use, for example, as a material for the extension tube 17. The formation of the fibre 11 from molten quartz glass is still going on at the quartz tube 17, wherein a too abrupt temperature gradient, when coming down from the range of influence of the heating element 13, would be harmful for the formation of the fibre 11 by causing an undesired cold shock to the fibre 11.

Preferably in the area right after the quartz tube 17 in the direction of drawing the fibre, the extension tube 19 is provided with a thermophoretic collector 20 according to the invention, containing cooled means, to deposit impurities carried by the gas flow 18 surrounding the fibre 11. A downwards flow 18 of an inert gas, preferably argon gas, is advantageously arranged in the drawing furnace 10. Said gas flow proceeds from the range of influence of the heating element 13 further past the quartz tube 17 and to the range of influence of the thermophoretic collector 20, where the fibre 11 is still being formed and thereby still in a molten or partly molten state. The length of the thermophoretic collector in the direction of drawing the fibre 11 may be, for example, 150 to 250 mm.

Thermophoresis is a physical phenomenon well known as such, referring to the movement of particles under the effect of a temperature gradient. By the effect of thermophoresis, the particles tend to move from an environment at a higher temperature towards an environment at a lower temperature. The thermophoretic force moving the particles is proportional to the temperature gradient exerted on the particles.

In the case of the invention, the impurities carried by the gas flow 18 thus tend to move by the effect of the thermophoretic force from the hot gas flow 18, whose temperature at the thermophoretic collector 20 is still in the order of 1000°C, towards the cooled surfaces of the collector 20. When impinging on said cooled surface, the impurities are effectively deposited on said surface.

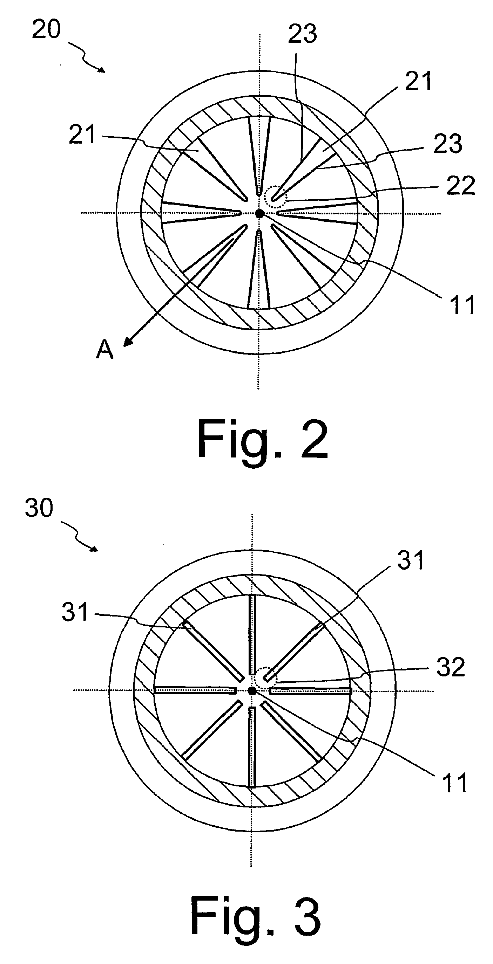

Figure 2 shows in more detail the structure of the thermophoretic collector 20 according to one embodiment of the invention, seen in a cross-sectional view from the direction of drawing the fibre (from above).

In the structure of Fig. 2, the cooled means 21 are arranged symmetrically to surround the path of the fibre 11 in such a way that the solid angle covered by a single means 21, when seen from the fibre 11, is small. To put it in other words, the fibre 11 "sees" only a small area of each means 21 in relation to the total surface area of said means 21.

Because the heat transfer from the fibre 11 to the environment takes place substantially merely by radiative heat transfer and not by convection, the fibre 11 thus "sees" only the sharp ends 22 of the means 21 designed to be wedge-like, which have a small surface area pointed at the fibre 11, wherein said means 21 do not substantially cool the fibre 11 by radiative heat transfer. By the present invention, thermophoresis can thus be used effectively for the collection of impurities from the hot gas layer surrounding the fibre 11 in such a way that the fibre 11 is not exposed to a cold shock.

When said wedge-like cooled means 21 are arranged, according to the invention, as a ribbed structure 20 in the direction of the fibre 11, as shown in Fig. 2, said structure 20 does not substantially disturb the gas flow 18 surrounding the fibre 11. Consequently, this makes it possible to control the gas flow 18 surrounding the fibre 11 in such a way that the gas flow 18 is not obstructed and also no turbulence is caused in it. Preferably, a downwards gas flow 18 is used in the drawing furnace 10, the speed of the gas flow being adapted so that the speed difference between the forming fibre 11 and the gas flow 18 is as small as possible. This is a very important requirement for the manufacture of an optical fibre with a diameter of uniform thickness, particularly when high drawing speeds are used.

In one embodiment of the invention, the distance between the cooled means 21 and the fibre 11 is arranged to be adjustable during the fibre drawing process. In other words, the wedge-like cooled means 21 shown in Fig. 2 can be adjusted to change the distance between the sharp tips 22 of said means and the fibre 11. An advantage of this embodiment is that, for example, at the beginning of the fibre drawing process, the cooled means 21 can be pulled outwards (in the direction of arrow A in Fig. 2) in such a way that a possible "starting drop" of molten quartz glass with a larger diameter is allowed to fall freely through the thermophoretic collector 20. After this, the cooled means 21 can be adjusted at an optimal distance from the fibre 11. The adjustment of the distance between said cooled means 21 and the fibre 11 can be implemented in any way obvious as such for a person skilled in the art.

At gas flow speeds which are typically used in a fibre drawing process (gas supply to the oven typically in the order of 5 to 10 normal litres per minute), thermophoresis will work efficiently at a length of a few centimetres only; therefore, the ribbed structure shown in Fig. 2 is particularly advantageous. By means of said structure, it is possible to bring cooled surfaces which effectively deposit impurities, sufficiently close to the fibre 11 without significantly increasing the radiation heat transfer from the fibre 11. The impurities can thus be effectively collected from the immediate vicinity of the fibre 11, where they would otherwise be most likely to come into contact with the fibre 11.

Instead of using wedge-like ribs parallel to the fibre 11, as shown in Fig. 2, the thermophoretic collector 20 can also be implemented by using cooled means having another kind of geometry.

Figure 3 shows a structure for a thermophoretic collector 30 which is ribbed in the direction of the fibre 11, and in which the single cooled means 31 are designed to be rectangular instead of conical. Seen from the fibre 11, the ends 32 of the rectangular means 31 still represent a relatively small surface area and thereby do not cause too quick a cooling of the fibre 11.

Preferably, a liquid or gas flow is introduced in the cooled means 21, 31 to cool said means in the thermophoretic collector 20, 30. For example, the conical cooled means 21 shown in Fig. 2 (or the rectangular means 31 of Fig. 3, respectively) can be implemented as being entirely hollow or containing separate cooling channels, wherein for example cooling water can be arranged to circulate inside the single means 21. The surface temperature of the cooled means 21, and thereby the thermophoretic collection efficiency, can be adjusted by adjusting the efficiency of the cooling, such as the flow rate of the cooling liquid. If necessary, the cooling channel/channels inside the single cooled means 21 can be arranged by cooling that surface of said cooled means 21 which is pointed at the fibre 11 less than the other surfaces of said means. In other words, for example in the situation of Fig. 2, the tips 22 of the cooled means 21 pointed at the fibre 11 are cooled less than the sides 23 of the conical means 21. If necessary, said tips 22 can also be insulated with a thermally insulating structure from the cooled sides 23 of said cooled means 21, wherein the temperature will remain higher at the tip 22 pointed at the fibre 11 than in the other parts of the cooled means 21.

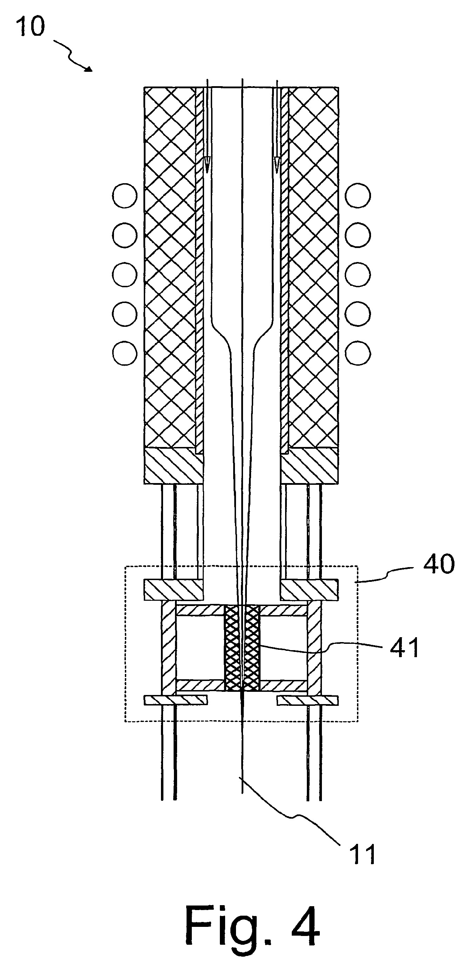

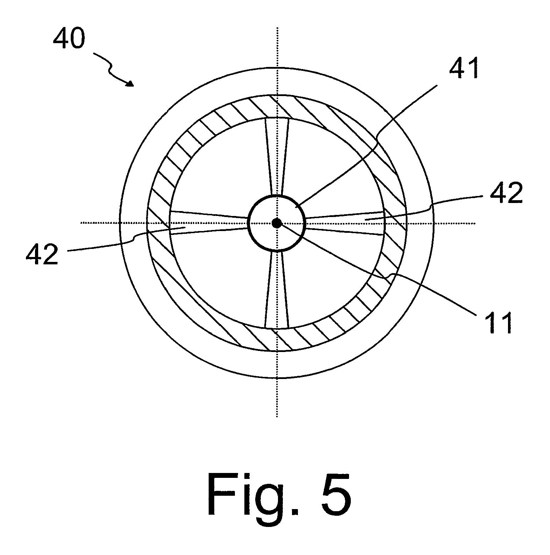

Furthermore, Figs. 4 and 5 show, in principle views, the net-like structure of a thermophoretic collector 40. Around the fibre 11, there is arranged a net-like cooled means 41 whose surface area, seen from the fibre 11, is small but which net-like means 41 provides a sufficiently cold surface area for efficient thermophoretic deposition of impurities. The net-like means 41 is cooled by conveying heat away from said means by cooled supporting means 42 used for the connection of the means 41. The supporting means 42 as such may be, for example, equipped with an internal liquid cooling.

By various combinations of the methods and device structures presented in connection with the different embodiments of the invention presented above, it is possible to provide various embodiments of the invention which fall within the scope of the claims.

## Claims

1. A method of manufacturing an optical fibre (11), in which method a fibre preform (12) is placed in a vertical position in a drawing furnace (10) or the like, in which drawing furnace (10) the fibre preform (12) is heated in a heating zone in such a way that a thin fibre (11) is formed of the molten material (16) being formed at the lower end of the fibre preform (12) by means of gravity and/or downward drawing of the fibre (11), and the forming fibre (11) is guided to cool down in a controlled manner in an extension tube (19) following the heating zone, in which extension tube (19) impurities are removed from the gas flow (18) surrounding the fibre (11) by utilizing condensation, **characterized in that** one or more cooled means (21 , 31 , 42) are placed in the extension tube (19) after said heating zone, along the path of the molten or still partly molten fibre (11), so that impurities carried by the gas flow (18) surrounding the fibre (11) thermophoretically deposit on its surfaces, and that said one or more cooled means (21, 31, 42) are designed and placed in such a way that the cooled means (21, 31, 42) form a structure which is ribbed in cooled the direction of the fibre (11) and the solid angle covered by said cooled means (21, 31, 42), seen from the fibre (11), is small, so that said cooled means (21, 31, 42) do not substantially cool the fibre (11) by radiative heat transfer.

2. The method according to claim 1, **characterized in that** said one or more cooled means (21, 31, 42) are placed symmetrically around the path of the fibre (11).

3. The method according to claim 1 or 2, **characterized in that** the distance between said one or more cooled means (21, 31, 42) and the fibre (11) is adjusted during the fibre drawing process.

4. A device for the manufacture of an optical fibre (11), which device comprises a drawing furnace (10) or the like intended for vertically taking up at least one fibre preform (12), the fibre preform (12) being arranged to be heated in a heating zone of said drawing furnace (10) in such a way that a thin fibre (11) is formed of the molten zone (16) being formed at the lower end of the fibre preform (12) by means of gravity and/or downward drawing of the fibre (11), and which forming fibre (11) is guided to cool down in a controlled manner in an extension tube (19) following the heating zone, which extension tube (19) further comprises means for removing impurities from the gas flow (18) surrounding the fibre (11) by utilizing condensation, **characterized in that** one or more cooled means (21, 31, 42) are placed in the extension tube (19) following said heating zone, along the path of the molten or still partly molten fibre (11), so that impurities carried by the gas flow (18) surrounding the fibre (11) thermophoretically deposit on its surfaces, and that said one or more cooled means (21, 31, 42) are designed and placed in such a way that the cooled means (21, 31, 42) form a structure which is ribbed in the direction of the fibre (11) and the solid angle covered by said cooled means (21, 31, 42), seen from the fibre (11), is small, so that said cooled means (21, 31, 42) do not substantially cool the fibre (11) by radiative heat transfer.

5. The device according to claim 4, **characterized in that** said one or more cooled means (21, 31, 42) are placed symmetrically around the path of the fibre (11).

6. The device according to claim 4 or 5, **characterized in that** the distance between said one or more cooled means (21, 31, 42) and the fibre (11) is arranged to be adjustable during the fibre drawing process.

7. The device according to any of the preceding claims 4 to 6, **characterized in that** said cooled means (21, 31) consist of a structure (20, 30) which is ribbed in the direction of drawing of the fibre (11), in which structure (20, 30) the single cooled ribs/means (21, 31) have a wedge-like or rectangular cross-section in the direction transverse to the travel direction of the fibre (11), the narrower tips/sides (22, 32) of said cooled means (21, 31) being pointed at the fibre (11).

8. The device according to any of the preceding claims 4 to 7, **characterized in that** said cooled means (42) comprise a net-like structure (41) surrounding the fibre (11) in its longitudinal direction for removing impurities from the gas flow, said net-like structure (41) being cooled by said cooled means (42).

## Patentansprüche

1. Herstellungsverfahren für eine optische Faser (11), wobei bei diesem Verfahren eine Faservorform (12) in einer vertikalen Position in einem Zugumformungsofen (10) oder dergleichen platziert wird, wobei die Faservorform (12) im Zugumformungsofen (10) in einer Erhitzungszone derart erhitzt wird, dass eine dünne Faser (11), gebildet aus geschmolzenem Material (16), am unteren Ende der Faservorform (12) durch Schwerkraft und/oder durch nach unten Ziehen der Faser (11) gebildet wird, und die sich bildende Faser (11) zum Abkühlen in kontrollierter Weise in einer an die Erhitzungszone anschließenden Verlängerungsröhre (19) geführt wird, wobei in der Verlängerungsröhre (19) Verunreinigungen aus dem die Faser (11) umgebenden Gasstrom (18) durch Nutzung von Kondensation entfernt werden, **dadurch gekennzeichnet, dass** ein oder mehrere gekühlte Mittel (21, 31, 42) in der Verlängerungsröhre (19) nach besagter Erhitzungszone entlang des Weges der geschmolzenen oder noch teilweise geschmolzenen Faser (11) angeordnet ist/sind, sodass sich im die Faser (11) umgebenden Gasstrom (18) getragene Verunreinigungen auf deren Oberfläche(n) ablagern, und dass das eine oder die mehreren gekühlte(n) Mittel (21, 31, 42) in solch einer Weise ausgestaltet und angeordnet ist/sind, dass das/die gekühlte(n) Mittel (21, 31, 42) eine Struktur bildet/bilden, die in Richtung der Faser (11) gerippt ist und der Raumwinkel gebildet durch das oder die gekühlte(n) Mittel (21, 31, 42) betrachtet von der Faser (11) aus klein ist, sodass das oder die gekühlte(n) Mittel (21, 31, 42) die Faser (11) durch strahlungsmäßigen Hitzetransfer nur unwesentlich kühlt/kühlen.

2. Verfahren nach Anspruch 1, **dadurch gekennzeichnet, dass** das eine oder die mehreren gekühlte(n) Mittel (21, 31, 42) symmetrisch rund um den Weg der Faser (11) platziert ist/sind.

3. Verfahren gemäß Anspruch 1 oder 2, **dadurch gekennzeichnet, dass** der Abstand zwischen dem einem oder den mehreren gekühlten Mitteln (21, 31, 42) und der Faser (11) während des Faserziehungsprozesses eingestellt wird.

4. Vorrichtung für die Herstellung einer optischen Faser (11), wobei die Vorrichtung einen Zugumformungsofen (10) oder dergleichen bestimmt für die vertikale Aufnahme von zumindest einer Faservorform (12) umfasst, wobei die Faservorform (12) angeordnet ist, um in einer Erhitzungszone in besagtem Zugumformungsofen (10) in einer Weise erhitzt zu werden, dass eine dünne Faser (11) aus der geschmolzenen Zone (16) gebildet wird, die sich am unteren Ende der Faservorform (12) durch die Schwerkraft und/oder durch nach unten Ziehen der Faser (11) bildet, und wobei die gebildete Faser (11) zum Abkühlen in kontrollierter Weise in einer an die Erhitzungszone anschließenden Verlängerungsröhre (19) geführt wird, wobei die Verlängerungsröhre (19) ferner Mittel für das Entfernen von Verunreinigungen aus dem die Faser (11) umgebenden Gasstrom (18) durch Nutzung von Kondensation, umfasst, **dadurch gekennzeichnet, dass** ein oder mehrere gekühlte Mittel (21, 31, 42) in der Verlängerungsröhre (19) anschließend an besagte Erhitzungszone entlang des Weges der geschmolzenen oder noch teilweise geschmolzenen Faser (11) angeordnet ist/sind, sodass sich Verunreinigungen die durch den die Faser (11) umgebenden Gasstrom (18) getragen werden auf ihrer/ihren Oberfläche (n) ablagern, und dass das eine oder die mehreren gekühlte (n) Mittel (21, 31, 42) in solch einer Weise ausgestaltet oder angeordnet ist/sind, dass das/die gekühlte(n) Mittel (21, 31, 42) eine Struktur bildet/bilden, die in Richtung der Faser (11) gerippt ist und der Raumwinkel gebildet durch das oder die gekühlte(n) Mittel (21, 31, 42) betrachtet von der Faser (11) aus klein ist, sodass das oder die gekühlte(n) Mittel (21, 31, 42) die Faser (11) durch strahlungsmäßigen Hitzetransfer nur unwesentlich kühlt/kühlen.

5. Vorrichtung gemäß Anspruch 4 **dadurch gekennzeichnet, dass** das eine oder die mehreren gekühlte(n) Mittel (21, 31, 42) symmetrisch um den Weg der Faser (11) angeordnet ist/sind.

6. Vorrichtung gemäß den Ansprüchen 4 oder 5, **dadurch gekennzeichnet, dass** die Distanz zwischen dem einen oder den mehreren gekühlten Mitteln (21, 31, 42) und der Faser (11) eingerichtet ist, um während des Faserziehungsprozesses einstellbar zu sein.

7. Vorrichtung gemäß einem der vorhergehenden Ansprüche 4 bis 6, **dadurch gekennzeichnet, dass** die gekühlten Mittel (21, 31) aus einer Struktur (20, 30) bestehen, die in Richtung des Ziehens der Faser (11) gerippt ist, wobei in der Struktur (20, 30) die einzelnen gekühlten Rippen/Mittel (21, 31) einen keilförmigen oder rechtwinkeligen Querschnitt in der Richtung quer zur Bewegungsrichtung der Faser (11) haben, und die schmäleren Spitzen/Seiten (22, 32) von den gekühlten Mitteln (21, 31) zur Faser (11) gerichtet sind.

8. Vorrichtung gemäß einem der vorhergehenden Ansprüche 4 bis 7, **dadurch gekennzeichnet, dass** die gekühlten Mittel (42) eine netzartige, die Faser (11) in ihrer längsgestreckten Richtung umgebende Struktur (41) für das Entfernen von Verunreinigungen aus dem Gasstrom, umfasst, wobei besagte netzartige Struktur (41) durch besagte gekühlte Mittel (42) gekühlt ist.

## Revendications

1. Procédé de fabrication d'une fibre optique (11), dans lequel procédé une préforme de fibre (12) est placée dans une position verticale dans un four de fibrage (10) ou similaire, dans lequel four de fibrage (10) la préforme de fibre (12) est chauffée dans une zone de chauffage de telle manière qu'une fibre (11) mince est formée du matériau fondu (16) qui est formé au niveau de l'extrémité inférieure de la préforme de fibre (12) au moyen de la gravité et/ou du fibrage descendant de la fibre (11), et la fibre (11) en formation est guidée pour refroidir d'une manière commandée dans un tube d'extension (19) à la suite de la zone de chauffage, dans lequel tube d'extension (19) des impuretés sont supprimées du flux de gaz (18) entourant la fibre (11) en utilisant la condensation, **caractérisé en ce qu'**un ou plusieurs moyens refroidis (21, 31, 42) sont placés dans le tube d'extension (19) après ladite zone de chauffage, le long du chemin de la fibre (11) fondue ou partiellement fondue, de sorte que des impuretés transportées par le flux de gaz (18) entourant la fibre (11) se déposent par thermophorèse sur ces surfaces et **en ce que** lesdits un ou plusieurs moyens refroidis (21, 31, 42) sont conçus et placés de telle manière que les moyens refroidis (21, 31, 42) forment une structure qui est nervurée dans le sens de la fibre (11) et l'angle solide couvert par lesdits moyens refroidis (21, 31, 42), observé depuis la fibre (11), est petit de sorte que lesdits moyens refroidis (21, 31, 42) ne refroidissent pas sensiblement la fibre (11) par transfert de chaleur rayonnante.

2. Procédé selon la revendication 1, **caractérisé en ce que** lesdits un ou plusieurs moyens refroidis (21, 31, 42) sont placés de façon symétrique autour du chemin de la fibre (11).

3. Procédé selon la revendication 1 ou 2, **caractérisé en ce que** la distance entre lesdits un ou plusieurs moyens refroidis (21, 31, 42) et la fibre (11) est ajustée pendant le procédé de fibrage.

4. Dispositif de fabrication d'une fibre optique (11), lequel dispositif comprend un four de fibrage (10) ou similaire destiné à prendre au moins une préforme de fibre (12), la préforme de fibre (12) étant agencée pour être chauffée dans une zone de chauffage dudit four de fibrage (10) de telle manière qu'une fibre (11) mince est formée de la zone moulée (16) qui est formée au niveau de l'extrémité inférieure de la préforme de fibre (12) au moyen de la gravité et/ou d'un fibrage descendant de la fibre (11), et laquelle fibre (11) en formation est guidée pour refroidir d'une manière commandée dans un tube d'extension (19) suivant la zone de chauffage, lequel tube d'extension (19) comprend en outre des moyens destinés à supprimer les impuretés du flux de gaz (18) entourant la fibre (11) en utilisant la condensation, **caractérisé en ce qu'**un ou plusieurs moyens refroidis (21, 31, 42) sont placés dans le tube d'extension (19) suivant ladite zone de chauffage, le long du chemin de la fibre (11) fondue ou encore partiellement fondue de sorte que les impuretés transportées par le flux de gaz (18) entourant la fibre (11) se déposent par thermophorèse sur ses surfaces et **en ce que** lesdits un ou plusieurs moyens refroidis (21, 31, 42) sont conçus et placés de telle manière que les moyens refroidis (21, 31, 42) forment une structure qui est nervurée dans le sens de la fibre (11) et l'angle solide couvert par lesdits moyens refroidis (21, 31, 42), observé depuis la fibre (11), est petit, de sorte que lesdits moyens refroidis (21, 31, 42) ne refroidissent pas sensiblement la fibre (11) par transfert de chaleur rayonnante.

5. Dispositif selon la revendication 4, **caractérisé en ce que** lesdits un ou plusieurs moyens refroidis (21, 31, 42) sont placés de façon symétrique autour du chemin de la fibre (11).

6. Dispositif selon la revendication 4 ou 5, **caractérisé en ce que** la distance entre lesdits un ou plusieurs moyens refroidis (21, 31, 42) et la fibre (11) est agencée pour être ajustable pendant le procédé de fibrage.

7. Dispositif selon l'une quelconque des revendications précédentes 4 à 6, **caractérisé en ce que** lesdits moyens refroidis (21, 31) sont constitués d'une structure (20, 30) qui est nervurée dans le sens du fibrage de la fibre (11), dans laquelle structure (20, 30) les moyens à nervures refroidis uniques (21, 31) présentent une section transversale de type coin ou rectangulaire dans le sens transversale au sens de déplacement de la fibre (11), les pointes/côtés plus étroits (22, 32) desdits moyens refroidis (21, 31) étant pointés au niveau de la fibre (11).

8. Dispositif selon l'une quelconque des revendications précédentes 4 à 7, **caractérisé en ce que** lesdits moyens refroidis (42) comprennent une structure (41) de type filet entourant la fibre (11) dans son sens longitudinal pour supprimer des impuretés du flux de gaz, ladite structure de type filet (41) étant refroidie par lesdits moyens refroidis (42).
